# EUROPEAN PATENT SPECIFICATION

(11) **EP 0 364 292 B1**
(45) Date of publication and mention of the grant of the patent: **29.12.1993**
(21) Application number: 89310533.8
(22) Date of filing: 13.10.1989
(51) Int. Cl.: H02K 11/00, H02K 13/10, H01R 39/04

(54) **Assembled commutator**
Zusammengesetzter Kommutator
Commutateur assemblé

(30) Priority: 13.10.1988 GB 8823991; 13.10.1988 GB 8823992
(43) Date of publication of application: 18.04.1990
(73) Proprietor: JOHNSON ELECTRIC S.A., CH-2300 La Chaux-de-Fonds (CH)
(72) Inventor: Wang, Patrick Shui-Chung, Repulse Bay Garden Repulse Bay (HK)
(74) Representative: Luckhurst, Anthony Henry William

(56) References cited:
- DE-B- 1 151 596
- GB-A- 2 203 291
- PATENT ABSTRACTS OF JAPAN vol. 7, no. 21 (E-155)(1166) 27 January 1983;& JP-A-57 177253

## Description

The present invention relates to an assembled commutator in which the segments have tangs arranged to be connected to an armature winding wire by a hot connection, such as forging or soldering.

When forging a connection between the segment tang and armature wire, both heat and pressure are applied to the tang. This can result in distortion of the commutator base beneath the tang. If the distortion is too great the base collapses away from beneath the tang so that it is no longer adequately supported in the forging process. The forging process typically produces a temperature of 430 degrees centigrade at the tang. Thermoplastics materials, which are most desirable for forming the commutator base, may withstand this temperature, but the combination of temperature and pressure distorts the base.

GB-A-2203291 discloses an assembled commutator for an electric motor with a heat resistant ring 11b. Embodiments described in GB-A-2203291 provide commutator bases of different materials to allow the materials of commutator bases to be selected generally to meet constraints imposed by the structure and operating conditions of the motor.

According to the invention there is provided an assembled commutator comprising a cylindrical base of thermoplastics material; a plurality of commutator segments mounted on the cylindrical base, each segment having at an end thereof a tang for connection to an armature winding wire by a process involving heat; and a ring of high temperature non-softening material provided on the cylindrical base to support the tangs during connection of the winding wire, in which the cylindrical base is formed with a step disposed radially inward of an axially extending portion of the tangs; the ring is located on the step; and at least one of the tangs has a finger to hold the ring on the step.

Preferably the ring is of phenolic, fibre-filled phenolic, or fibre material. Such materials may withstand temperatures higher than 500 degrees centigrade and will not soften, but rather will char at too high a temperature. The invention is particularly applicable to hot forging but also applicable to other techniques such as soldering the wire to the tangs.

Suppression means may be mounted on the base in the region of the tangs which makes electrical contact with each finger.

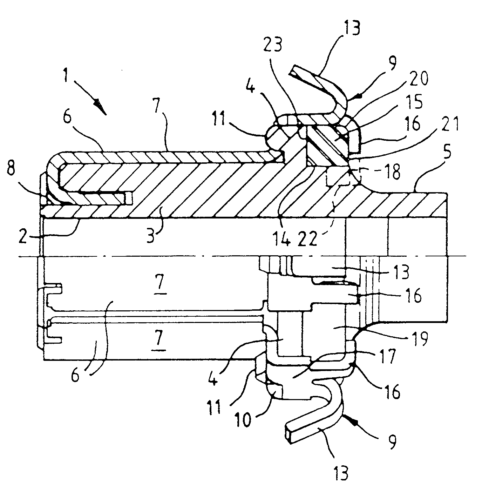

The invention will be further described by way of example with reference to the accompanying drawing which is a side view in partial cross-section of an assembled commutator forming an embodiment of the invention.

Referring to the drawing, an assembled commutator 1 comprises a cylindrical base 2 of thermoplastics having a main segment supporting part 3, a collar 4 and a spacer part 5 at a rear end which is arranged to abut a lamination stack of an armature. A plurality of commutator segments 6 (five in the example shown) are mounted on the base 2. Each segment 6 has a brush contacting part 7 with a finger at one end which locks into a recess 8 in the front end of the base 2, and a tang 9 at other end. Tangs 9 extend radially out from the brush contacting parts and have apertures 10 which fit over projections 11 on the front face of the collar 4 to hold that end of the segment against the base. The brush contacting part 7 may be glued to the base. The tangs 9 end in a U-shape 13 which rests on the collar 4. A step 14 is formed at the rear of the collar 4. A ring 15 of phenolic material or other high temperature, non-softening material such as fibre or fibre-filled phenolic is fitted on the step 14 beneath the U-shape parts 13. The U-shape parts 13 are supported on the outer circumferential surface 19 of the ring 15. Fingers 16 on the tangs 9 extend to either side of the U-shape parts 13 and are bent over the edge 20 of the ring 15 to bear against a radially extending surface 21 and hold the ring 15 in place against a radially extending wall 23 of the step 14. This will help to hold the segments against axial movement on the base 2. The fingers may be arranged to extend circumferentially and fit into recesses in the circumferential surface of the ring 15.

When forging a wire to a tang 9, the wire is looped into the U-shape part 13. A first electrode bears down on the U-shape part to collapse it onto the wire and a second electrode bears onto a wing 17 to one side. The phenolic ring 15 will withstand the heat generated and the pressure of the first electrode without softening or collapsing.

The invention is also of advantage when the wire is soldered to the tang.

As shown in dotted outline, a resistor or varistor ring 18, or other suppression element may be positioned on a second step 22 inside the ring 15 and the fingers 16 extended down to make electrical contact with the ring. In another embodiment, the suppression element may be positioned axially alongside the phenolic ring to make electrical contact with the underside of the tangs 9 and/or fingers 16. In another embodiment the ring 15 may be in the form of a varistor, or of phenolic material having a coating of resistive material which electrically connects the fingers 16 of adjacent segments.

The step 14 need not be circumferentially continuous but may, for example, be formed on buttresses at the rear of the collar 4.

## Claims

1. An assembled commutator comprising a cylindrical base (2) of thermoplastics material; a plurality of commutator segments (6) mounted on the cylindrical base (2), each segment (6) having at an end thereof a tang (9) for connection to an armature winding wire by a process involving heat; and a ring (15) of high temperature non-softening material provided on the cylindrical base (12) to support the tangs (9) during connection of the winding wire, characterised in that the cylindrical base (12) is formed with a step (14) disposed radially inward of an axially extending portion of the tangs (9); the ring (15) is located on the step (14); and at least one of the tangs has a finger (16) to hold the ring (15) on the step (14).

2. An assembled commutator according to claim 1 characterised in that the at least one tang (9) has a U-shape part (13) for receiving the winding wire and two said fingers respectively disposed on opposite sides of the U-shaped part.

3. An assembled commutator according to claim 2 characterised in that each tang (9) has two fingers (16) and each finger (16) extends circumferentially into a respective recess formed in the outer circumferential surface (19) of the ring (15).

4. An assembled commutator according to any one of claims 1 to 3, characterised in that the ring (15) is a varistor.

5. An assembled commutator according to claim 1, characterised by each tang having at least one finger (16), and suppression means (18) mounted on the base (2) in the region of the tangs (9) in electrical contact with each finger (16).

6. An assembled commutator according to claim 5, characterised by a second step (22) radially inward of the ring (15) for supporting the suppression means (18).

7. An assembled commutator according to any one of the preceding claims, characterised in that the step (14) is discontinuous and is formed by buttresses on the base.

## Patentansprüche

1. Zusammengesetzter Kommutator mit einer zylindrischen Basis (2) aus thermoplastischem Material; mit einer Vielzahl von an der zylindrischen Basis (2) montierten Kommutatorsegmenten (6), deren jedes an seinem einen Ende einen Fortsatz (9) für den Anschluß an einen Ankerwicklungsdraht durch ein Wärme involvierendes Verfahren hat; mit einem Ring (15) aus nicht erweichendem Hochtemperaturmaterial, der an der zylindrischen Basis (2) zum Stützen der Fortsätze (9) während des Anschlusses des Wicklungsdrahts vorgesehen ist, dadurch gekennzeichnet, daß die zylindrische Basis (2) mit einer radial innerhalb eines sich axial erstreckenden Bereichs der Fortsätze (9) angeordneten Stufe (14) ausgebildet ist; daß sich der Ring (15) auf der Stufe (14) befindet und daß zumindest einer der Fortsätze einen Finger (16) zum Halten des Rings (15) auf der Stufe (14) aufweist.

2. Zusammengesetzter Kommutator nach Anspruch 1, dadurch gekennzeichnet, daß zumindest ein Fortsatz (9) einen U-förmigen Teil (13) zur Aufnahme des Wicklungsdrahts aufweist und zwei der genannten Finger jeweils auf den einander gegenüberliegenden Seiten des U-förmigen Teils angeordnet sind.

3. Zusammengesetzter Kommutator nach Anspruch 2, dadurch gekennzeichnet, daß jeder Fortsatz (9) zwei Finger (16) hat und jeder Finger (16) sich in Umfangsrichtung in eine jeweilige Vertiefung hinein erstreckt, die in der äußeren Umfangsfläche (19) des Rings (15) ausgebildet ist.

4. Zusammengesetzter Kommutator nach einem der Ansprüche 1 bis 3, dadurch gekennzeichnet, daß der Ring (15) ein Varistor ist.

5. Zusammengesetzter Kommutator nach Anspruch 1, dadurch gekennzeichnet, daß jeder Fortsatz wenigstens einen Finger (16) hat und daß Unterdrückungsmittel (18) vorgesehen sind, die im Bereich der Fortsätze (9) an der Basis (2) montiert sind und sich mit jedem Finger (16) in elektrischem Kontakt befinden.

6. Zusammengesetzter Kommutator nach Anspruch 5, gekennzeichnet durch eine zweite Stufe (22) radial innerhalb des Rings (15) zum Stützen der Unterdrückungsmittel (18).

7. Zusammengesetzter Kommutator nach einem der vorhergehenden Ansprüche, dadurch gekennzeichnet, daß die Stufe (14) diskontinuierlich ist und durch Stützpfeiler an der Basis gebildet ist.

## Revendications

1. Commutateur assemblé comprenant une base cylindrique (2) en matériau thermoplastique; plusieurs segments de commutateur (6) montés sur la base cylindrique (2), chaque segment (6) ayant à son extrémité une patte (9) pour effectuer la connexion avec un fil de l'enroulement d'induit par un procédé utilisant la chaleur; et un anneau (15) en matériau non ramollissant à température élevée, disposé sur la base cylindrique (2) pour supporter les pattes (9) pendant la connexion du fil de l'enroulement, caractérisé en ce que la base cylindrique (2) présente un gradin (14) disposé radialement à l'intérieur d'une partie des pattes (9) s'étendant en direction axiale; en ce que l'anneau (15) est situé sur le gradin (14); et en ce qu'au moins l'une des pattes a un doigt (16) pour maintenir l'anneau (15) sur le gradin (14).

2. Commutateur assemblé selon la revendication 1, caractérisé en ce qu'au moins l'une des pattes (9) a une pièce (13) en forme de U destinée à recevoir le fil de l'enroulement et que deux des dits doigts sont disposés respectivement sur les faces opposées de la pièce en forme de U.

3. Commutateur assemblé selon la revendication 2, caractérisé en ce que chaque patte (9) a deux doigts (16) et que chaque doigt (16) s'étend périphériquement dans une encoche correspondante disposée dans la surface périphérique extérieure (19) de l'anneau (15).

4. Commutateur assemblé selon l'une quelconque des revendications 1 à 3, caractérisé en ce que l'anneau (15) est une résistance variable.

5. Commutateur assemblé selon la revendication 1, caractérisé en ce que chaque patte a au moins un doigt (16) et qu'un moyen de suppression (18) est monté sur la base (2) dans la région des pattes (9) en contact électrique avec chaque doigt (16).

6. Commutateur assemblé selon la revendication 5, caractérisé par un deuxième gradin (22) disposé radialement à l'intérieur de l'anneau (15) pour supporter le moyen de suppression (18).

7. Commutateur assemblé selon l'une quelconque des revendications précédentes, caractérisé en ce que le gradin (14) est discontinu et est formé de contreforts sur la base.
